# EUROPÄISCHE PATENTSCHRIFT

(11) **EP 1 840 440 B1**
(45) Veröffentlichungstag und Bekanntmachung des Hinweises auf die Patenterteilung: **01.09.2010**
(21) Anmeldenummer: 07405063.4
(22) Anmeldetag: 28.02.2007
(51) Int. Cl.: F16L 23/14, F24F 13/02

(54) **Eckwinkel**
Corner bracket
Pièce d'assemblage d'angle

(30) Priorität: 31.03.2006 CH 5342006
(43) Veröffentlichungstag der Anmeldung: 03.10.2007
(73) Patentinhaber: Schmidlin AG, 8910 Affoltern am Albis (CH)
(72) Erfinder: Decurtins, Albert, 8908 Hedingen (CH); Schmidlin, Robert, 8910 Affoltern am Albis (CH)
(74) Vertreter: Rentsch & Partner

(56) Entgegenhaltungen:
- EP-A1- 0 223 174
- DE-U1- 7 618 115
- US-A- 4 410 206
- US-A- 4 466 641
- US-A- 5 564 758

## Beschreibung

### FELD DER ERFINDUNG

Die vorliegende Erfindung betrifft Eckwinkel gemäss Oberbegriff des Patentanspruches 1 und mit solchen Eckwinkeln hergestellte Kanalstücke gemäss Patentanspruch 11.

### HINTERGRUND DER ERFINDUNG

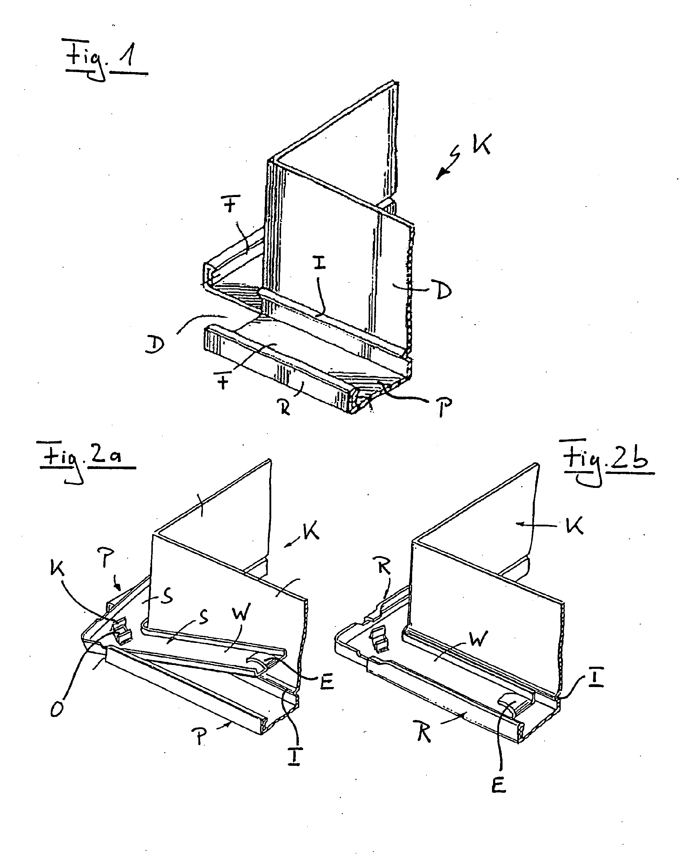

Lüftungskanäle, respektive Kanalstücke mit anprofilierten Flanschprofilen, wie sie von der Anmelderin unter der Marke Mabag^{®} in den Baureihen M20 und M30 seit Jahren äusserst erfolgreich hergestellt und vertrieben werden, sind konkurrenzlos dicht und hygienisch. Zur effizienten Herstellung von solchen Lüftungskanälen, die hohe Anforderungen an die Dichtheit erfüllen, hat es sich bewährt das Blech der Seitenwände der Kanalstücke endständig zu Flanschen zu formen, wie dies in der Figur 1 dargestellt ist. Anschliessend werden in den Eckbereichen der Kanalstückenden Eckwinkel angebracht.

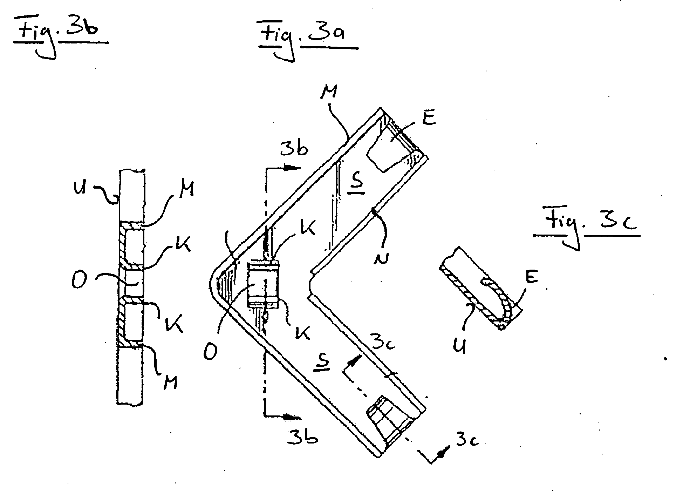

Die WO94/19144 beschreibt solche Eckwinkel oder Winkelplatten W zum Anordnen in einem Eckbereich eines Lüftungskanalstücks K, der von Flanschen mit U-förmigem Profil P gebildet wird. Die Winkelplatten, wie sie in den Figuren 2 und 3 gezeigt sind, weisen zwei Schenkel S auf, die einen Winkel einschließend unter Bildung einer gemeinsamen Ecke miteinander verbunden sind. Mehrere dieser Winkelplatten W können dabei so gestapelt werden, dass die Schenkel S aufeinander liegender Winkelplatten W fluchtend angeordnet sind und in dieselbe Richtung weisen. Dies wird dadurch erreicht, dass auf jedem Schenkel und jeder davon gebildeten Ecke Auskragungen K in eine gemeinsame Richtung so weit vorstehen, dass aufeinander liegende Winkelplatten parallel und im Abstand voneinander angeordnet sind, so dass ein Verschachteln der Winkelplatten verhindert wird. Es soll dadurch ermöglicht werden, dass sich einzelne zuunterst liegende Winkelplatten in horizontaler Richtung aus einem Plattenstapel herausschieben lassen. Damit die Winkelplatten in den Flanschen mit U-Profil der Kanalstücke positioniert werden können, ist in der WO94/19144 zudem eine Vorrichtung zum Anbringen und automatischen Fixieren einer oder mehrerer Winkelplatten an einem Kanalstück beschrieben. Mittels dieser Vorrichtung lässt sich von einem Plattenstapel in einem Magazin jeweils die zuunterst liegende Winkelplatte herausschieben, in einen Eckbereich des Kanalstücks K verbringen und über aneinander angrenzende Flansche F mit U-Profil positionieren.

Nachdem die Winkelplatten vollständig in die Flansche mit U-Profil eingepresst ist, werden die seitlichen Ränder R der Flansche mit U-Profil nahe der Ausnehmung im Eckbereich umgebogen, so dass sie die Winkelplatte derart übergreifen, dass sich eine sichere Verbindung zwischen der Winkelplatte und dem Kanalstück, respektive den Flanschen ergibt. Die eingesetzten Winkelplatten greifen mit den aufgebogenen inneren Schenkelkanten N unter eine Nut I der Kanalwand D und werden dadurch im U-Profil gehalten.

In den Figuren 2a und 2b ist ein Eckbereich eines Lüftungskanalstückes K gemäss Figur 1 mit teilweise und ganz eingesetzter Winkelplatte W gemäss der WO94/19144 dargestellt. Die Figur 3 zeigt eine solche Winkelplatte W (Figur 3a) und Teilschnitte von dieser im Bereich der erfindungswesentlichen Auskragungen K im Eckbereich F (Figur 3b) und an den Enden der Schenkel S (Figuren 3a und 3c), die das Verschachteln der gestapelten Winkelplatten verhindern sollen. In der Praxis hat sich gezeigt, dass die aus dem Blech der Winkelplatten ausgestanzten und aufgebogenen Auskragungen K ohne kosten- und zeitaufwändige Nachbearbeitung sehr scharfkantig sind. Dies führt beim Herstellen der Lüftungskanalstücke K, insbesondere beim Herausschieben der zuunterst liegenden Winkelplatten aus dem Plattenstapel zu Problemen, was wiederum zum Blockieren der Vorrichtung oder zu einer falschen Positionierung der Winkelplatten im Eckbereich des Kanalstücks führen kann. Beim anschliessenden Einpressen der inkorrekt positionierten Winkelplatten in die Flansche mit U-Profil, werden sowohl die Winkelplatten als auch die die äusseren Ränder der Flansche verbogen und oft sogar irreparabel beschädigt.

Um die Auskragungen im Bereich der annähernd rechteckigen Schrauböffnung 0 zu bilden wird eine H-förmige Stanzung angebracht und die beiden dadurch gebildeten Blechzungen werden mit den freien Enden um 90° nach oben gebogen um die beiden annährend rechtwinkligen Auskragungen zu bilden. Zum Erstellen der Auskragungen E an beiden Schenkelenden werden längere Blechzungen um fast 180° umgebogen. Um die Winkelplatten zusätzlich zu stabilisieren sind die Schenkel und der Eckbereich im Querschnitt U-förmig gestaltet, so dass die nach oben gebogene Innen- und Aussenkante N, M einerseits die Torsionssteifigkeit erhöhen und andererseits einen besseren Sitz im U-förmig Flanschprofil ermöglichen. Während die Unterseite U der Winkelplatten keinerlei Überstände aufweist, weisen die gestanzten und um 90° nach oben gebogenen Blechkanten L der Auskragungen und der Innen- und Aussenkante Bearbeitungsspuren und Grate auf und liegen in der Praxis gerade nicht in einer gemeinsamen obere Ebene, wie dies in den Figuren der WO94/19144 suggeriert ist.

Ein weiterer Nachteil der Winkelplatten wie sie aus der WO94/19144 bekannt sind, besteht darin, dass die scharfkantigen Auskragungen bei der Montage der Kanalstücke ein erhebliches Verletzungsrisiko für die Monteure darstellen, da die einzelnen Kanalstücke gerade im Bereich der Winkelplatten miteinander verschraubt werden. Die scharfkantigen Auskragungen K, die die Öffnung O im Eckbereich der Winkelplatte bilden, bergen nicht nur ein erhebliches Verletzungsrisiko beim Positionieren der Schrauben oder Muttern zum Verbinden von benachbarten Kanalstücken, sondern sie Verformen sich beim Anziehen der Verschraubung. Ein kontrolliertes Verschrauben bis zum Erreichen eines festgelegten Drehmomentes wird dadurch praktisch unmöglich und oft führt die Deformation der Auskragungen sogar zum Blockieren der Verschraubung. Das Lösen der Verschraubung im Falle einer Revision oder einer Demontage des Lüftungskanals wird durch die verformten Auskragungen im Eckbereich ebenfalls erheblich erschwert.

Aus der deutschen Gebrauchsmusterschrift DE 7618115 U1 ist eine vorgefertigte Flanschverbindung für Klimatisierungskanäle mit in Einsteckhohlräume von Rahmenschenkeln der Flanschverbindung eingesteckten Eckwinkeln bekannt. Diese Eckwinkel sind massiv, einlagig, aus Metall gestanzt und haben zwei gerade Schenkel, die der Dicke nach satt in den tragenden Bereich des Einsteckhohlraumes der Rahmenschenkel passen. Die Breite der Eckwinkel ist so bemessen, dass die äussere Stirnseite im eingeschobenen Zustand an der entsprechenden Wand des Einsteckhohlraums anliegt. Die beiden Schenkel sind durch einen Mittenbereich miteinander verbunden, der etwa um eine Blechstärke der Rahmenschenkel herausgeprägt ist, wobei der Mittenbereich das innere Eck des Eckwinkels bildet. Dadurch, dass die im Querschnitt rechtwinkligen Schenkel der Eckwinkel der Dicke nach satt in die ebenfalls rechtwinkligen Einsteckhohlräume der Rahmenschenkel passen müssen, ist die Gestaltungsfreiheit der Schenkelgeometrie stark eingeschränkt. Die Stabilität und Steifigkeit der Eckwinkei-Schenkel wird primär durch eine ausreichende Materialstärke erreicht.

In der US 5564758 sind Winkelplatten beschrieben, die analog zu den oben zur WO94/19144 ausführlich beschriebenen Winkelplatten aus Blech gestanzt und an den Seitenschenkeln mit aufgebogenen Rändern versehen sind. Ohne aufwändige Nachbearbeitung führt dies beim Herstellen der Lüftungskanalstücke, insbesondere beim Herausschieben der zuunterst liegenden Winkelplatten aus dem Plattenstapel zu Problemen, bis hin zum Blockieren der Vorrichtung oder fehlerhaftem Einpressen der inkorrekt positionierten Winkelplatten in die Flansche am Lüftungskanal.

### ZUSAMMENFASSUNG DER ERFINDUNG

Es ist daher eine Aufgabe der vorliegenden Erfindung Eckwinkel zum Verbinden von an Enden von Kanalstücken angebrachten Flanschen mit U-förmigem Profil zur Verfügung zu stellen, die die Nachteile der oben genannten Eckwinkel nicht aufweisen.

Diese Aufgabe wird erfindungsgemäß gelöst durch Eckwinkel mit den Merkmalen des Anspruchs 1 und Kanalstücke mit den Merkmalen des Anspruchs 9.

Diese Aufgabe wird erfindungsgemäß gelöst durch Eckwinkel mit den Merkmalen des Anspruchs 1 und Kanalstücke mit den Merkmalen des Anspruchs 11.

Vorteilhafte Ausführungsformen und Weiterbildungen der vorliegenden Erfindung sind in den abhängigen Ansprüchen beansprucht.

Da bei den neuen Eckwinkeln gemäss der vorliegenden Erfindung auf das aufbiegen von scharfkantigen Auskragungen verzichtet werden kann, löst sich das Problem der scharfen Kanten von selbst. Es besteht keine Verletzungsgefahr mehr beim transportieren und Montieren der mit den neuen Eckwinkeln versehenen Kanäle und Formteile.

Ein weiterer wesentlicher Gedanke der Erfindung besteht darin plane und glatte Auflagefläche im Bereich Schraubverbindung zur Verfügung zu stellen um eine gute Zugänglichkeit zu gewährleisten und ein Verklemmen der Montagewerkzeuge zu verhindern und das Verletzungsrisiko für das Montagepersonal zu minimieren.

Zudem sorgt eine saubere Absetzung der Eckplatte für plane und glatte Dichtfläche.

Abgesetzte Klemmkrallen greifen unter die umlaufenden Nuten der Kanalwand und verhindern das Abkippen der eingebauten Eckwinkel im Flanschprofil sicher und zuverlässig auch bei Stössen und starker Belastung der Kanalstücke, wie sie beim Transport oder beim Montieren auftreten können. Die neuen Klemmkrallen der Eckwinkel stellen die form- und kraftschlüssige Verbindung mit der Führungsnute der Kanalwand im Endbereich sicher.

Ein weiterer wesentlicher Gedanke der Erfindung besteht darin die Stabilität gegenüber den bekannten Eckwinkeln zu erhöhen. Da sich die Nocken und Längsrippen der neuen Eckwinkel aus dem vollen Material formen lassen, ohne dass um 90° oder mehr gebogen werden muss, kann mit wesentlich stärkeren Materialien als bisher gearbeitet werden.

Trotz mehrfacher Abstufung und teilweiser Verschachtelung lassen sich die, in einem Magazin übereinander gestapelten, neuen Eckwinkel problemlos von unten her aus dem Stapel schieben.

### KURZBESCHREIBUNG DER FIGUREN

Im Folgenden wird anhand der in den Figuren dargestellten Beispiele die Erfindung näher beschrieben. Dabei zeigen rein schematisch die
- Fig. 1: einen Eckausschnitt eines Kanalstücks mit angeformten Flanschen gemäss dem Stand der Technik;
- Fig. 2a: eine Winkelplatte aus dem Stand der Technik beim Einsetzen in einen Eckbereich des Kanalstückes gemäss Figur 1;
- Fig. 2b: eine Winkelplatte aus dem Stand der Technik eingesetzt im Eckbereich des Kanalstückes gemäss Figur 1;
- Fig. 3a: die Winkelplatte gemäss Figur 2 in Ansicht von Oben;
- Fig. 3b: einen Schnitt durch die Winkelplatte gemäss Fig. 3a entlang 3b-3b;
- Fig. 3c: einen Teilschnitt durch die Winkelplatte gemäss Fig. 3a entlang 3c-3c;
- Fig. 4: eine perspektivische Sicht von schräg Oben auf einen Eckwinkel gemäss einer Ausführungsform der Erfindung;
- Fig. 5: eine Sicht von Oben auf den Eckwinkel gemäss Figur 4;
- Fig. 6: eine Ansicht auf eine Aussenseite eines rechten Schenkel des Eckwinkels gemäss Figur 5;
- Fig. 7: einen Schnitt durch einen rechten Schenkel des Eckwinkels gemäss Figur 6 entlang A-A;
- Fig. 8: einen Schnitt durch einen linken Schenkel des Eckwinkels gemäss Figur 5 entlang B-B;
- Fig. 9: eine Ansicht auf eine Innenseite eines rechten Schenkel des Eckwinkels gemäss Figur 5;
- Fig. 10: eine Sicht von Unten auf den Eckwinkel gemäss Figur 4;
- Fig. 11: eine Sicht von D auf den Eckwinkel gemäss Figur 5;
- Fig. 12: einen Eckwinkel gemäss einer weiteren Ausführungsform der Erfindung; und
- Fig. 13: einen Schnitt durch einen weiteren Typs von Profilflanschen zur Aufnahme erfindungsgemässer Eckwinkel.

### DETAILLIERTE BESCHREIBUNG BEVORZUGTER AUSFÜHRUNGSFORMEN

Wenn im Folgenden von Lüftungskanälen, Kanalstücken oder Formstücken die Rede ist, so soll dies auch andere Formstücke in allen Abmessungen von 100/100 mm bis 3000/3000 mm und in diversen Materialarten für Neu- und Umbauten umfassen, bei deren Herstellung und Verbindung erfindungsgemässe Eckwinkel zum Einsatz kommen können.

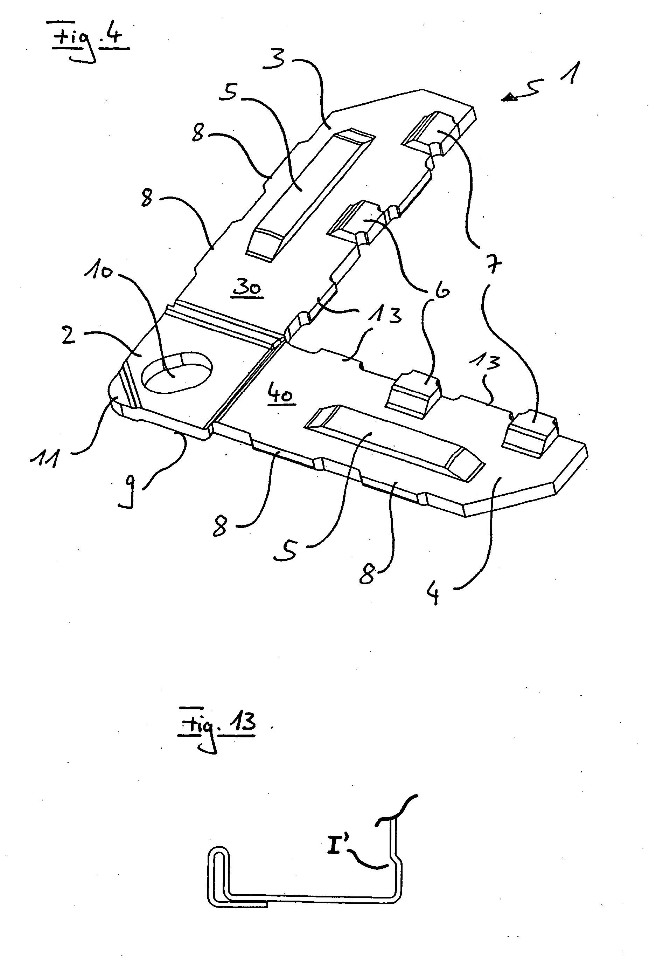

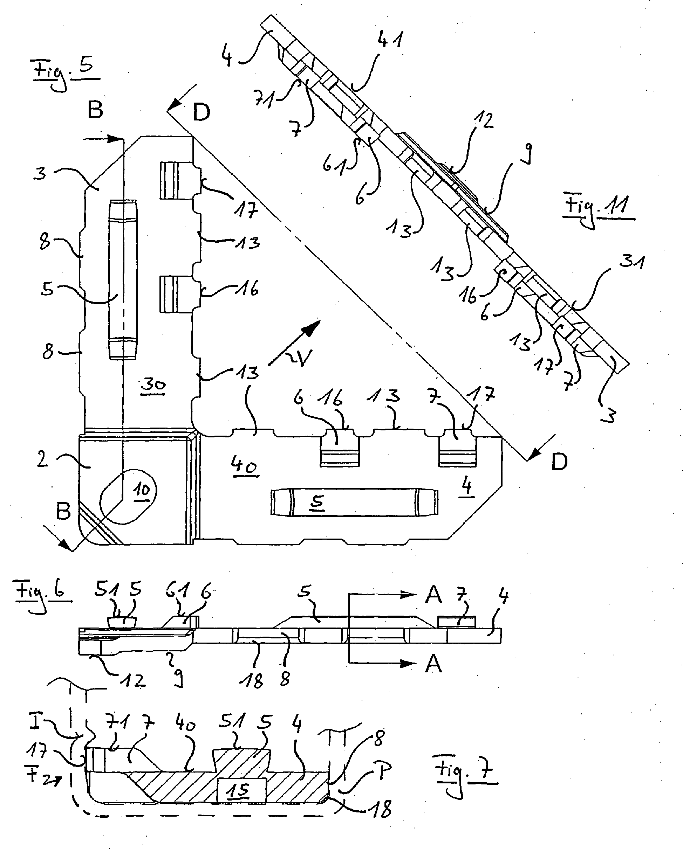

Ein einstückiger Eckwinkel 1 gemäss einer ersten Ausführungsform der vorliegenden Erfindung ist vorzugsweise in einem einzigen Arbeitsschritt aus einem Metallblech gestanzt. Der Eckwinkel ist in der Figur 4 annähernd in der Lage dargestellt, in der er in die Flansche im Eckbereich des Kanalstücks K gemäss der Figur 1 eingesetzt würde. Der Eckwinkel 1 umfasst eine Eckplatte 2, die gegenüber zwei Schenkeln 3, 4 planparallel nach unten abgesetzt ist. Aus der Figur 5 wird deutlich, dass der linke 3 und der rechte Schenkel 4 einen Winkel von 90° einschliessen und vorzugsweise symmetrisch zur Winkelhalbierenden ausgebildet sind. Die beiden Schenkel sind durch oberseitige Längsrippen 5 verstärkt. Die Längsrippen sind im Querschnitt nicht rechteckig, sondern verbreitern sich nach oben hin leicht, wie dies in der Figur 7 im Schnitt verdeutlicht ist. Werden die Eckwinkel 1 in einem Magazin übereinander gestapelt, so verhindert diese Formgebung, dass die Längsrippe 5 eines unteren Eckwinkels in eine Längsnut 15 eines darüber liegenden Eckwinkels eingreift. Durch entsprechenden hohen Druck beim Stanzen wird ein Materialfluss erzeugt, der für eine glatte Oberseite 51 der Längsrippen 5 ohne scharfe Kanten sorgt. In einer Ebene mit den Oberseiten 51 der Längsrippen 5 liegen Oberseiten 61, 71 von ebenfalls nach oben abgesetzten Klemmkrallen 6, 7. Die Klemmkrallen 6, 7 sind an den Innenseiten der Schenkel 3, 4 positioniert, so dass ihre senkrechten Klemmflächen 16, 17 beim Einbau in ein Kanalstück an der Kanalwand zum Anliegen kommen. Die Klemmkrallen 6, 7 greifen dabei form- und kraftschlüssig in die Profilnut P der Flansche ein und verhindern das Abkippen des eingesetzten Eckwinkels auch bei starken Belastungen zuverlässig. Zur Herstellung der Klemmkrallen wird das Metallblech aus dem die Eckwinkel gemäss der vorliegenden Erfindung aus Brandschutzgründen vorzugsweise gefertigt sind, mit zwei gegensinnigen Biegungen versehen. Wie in der Figur 7 im Schnitt dargestellt ist, muss keine der beiden Biegungen 45° überschreiten um die Klemmkralle 7 so weit aus der Schenkelebene zu drücken, dass die Oberseite 71 der Klemmkralle mit der Oberseite 51 der Längsrippe 5 In einer gemeinsamen Ebene liegt. In einem bevorzugten Ausführungsbeispiel beträgt die Materialstärke des Eckwinkels etwa 3 mm. Die Oberseiten der Klemmkrallen und der Längsrippen liegen um annähernd eine Materialstärke über den Oberflächen 30, 40 der Schenkel, vorzugsweise um 2.8 mm. Von der Schenkelunterseite 31, 41 bis zur Krallenoberseite 61, 71 beträgt die Höhe im Schenkelbereich daher in einer bevorzugten Ausführungsform 5.8 mm bei einer Schenkelbreite von 29.4 mm.

Die Stirnflächen 16, 17 der Klemmkrallen 6, 7 ragen vorzugsweise um einige Zehntel mm weiter nach innen vor als auf Lücke angeordnete Klemmnocken 13, die koplanar mit den Schenkeln weiter unten an der Kanalwand angreifen. Die Nocken 13 sind an unteren Kanten 14 abgerundet, um einen optimalen Sitz im U-förmigen Flansch F zu gewährleisten, wie es in der Figur 7 angedeutet ist. An der Aussenseite der Schenkel 3, 4 sind koplanar mit den inneren Klemmnocken 13 Klemmnocken 8 vorgesehen, die ebenfalls abgerundete Unterkanten 18 aufweisen.

Im eingebauten Zustand liegen die derart geformten Schenkel 3, 4 der Eckwinkel 1 mit gutem Sitz im U-förmigen Profilflansch und werden zum Beispiel auf bekannte Weise durch Umbiegen der Randwulste der Profilflansche fixiert. Die Eckplatte ist dabei nach unten abgesetzt in der Eckaussparung zwischen zwei benachbarten Profilflanschen angeordnet, so dass ihre unterseitigen Dichtflächen 9 planparallel zu den Unterseiten der Profilflansche zu liegen kommt. Diese Abstufung der Eckwinkel im Bereich der Eckplatten 2 führt zu einer hervorragenden Dichtung im Eckbereich beim Verbinden von zwei Kanalstücken, da sie der Blechstärke der Profilflansche Rechnung trägt und das Schaffen einer einheitlichen unteren Dichtfläche von Eckplatte und Unterseiten der Profilflansche ermöglicht. Werden Lüftungskanalstücke mit herkömmlichen Winkelplatten, das heisst mit Platten mit einer einheitlich planen Unterseite ohne Absatz zwischen Eckplatte und Schenkeln wie sie zum Beispiel aus der W094/19144 bekannt, zusammengebaut, so werden die Eckbereiche der Winkelplatten beim Verschrauben zueinander gezogen um den, von den beiden aneinander liegenden Profilflanschen im Eckbereich gebildeten, Spalt zu schliessen. Die übereinander liegenden Schenkel der derart im Eckbereich verbundenen Winkelplatten werden dabei jedoch auseinandergedrückt und leiten diese Kraft in die jeweiligen Profilflansche ein. Die benachbarten Profilflansche werden dadurch von beiden Eckbereichen her voneinander weggehebelt, was sich nachteilig auf die Dichtung auswirkt. Die abgesetzte Eckplatte der erfindungsgemässen Eckwinkel verhindert diesen negativen Vorspanneffekt vollständig.

In vorteilhaften Ausführungsformen der vorliegenden Erfindung ist im unteren äusseren Eckbereich der Eckplatte 2 zusätzlich noch eine Spannstufe 11 angeformt. Werden nun zwei Kanalstücke mit Eckwinkeln 1 gemäss der vorliegenden Erfindung zusammengebaut, so kommen untere Spannflächen 12 dieser Spannstufen 11 in gegenseitigen Kontakt und bewirken beim Anziehen der Verbindungsschrauben eine Vorspannung der miteinander verschraubten Eckwinkel, die über die Schenkel in die jeweiligen benachbarten Profilflansche eingeleitet wird und diese gegeneinander drückt. Dies verbessert die Dichtigkeit der Verbindung zwischen den beiden Kanalstücken ganz erheblich.

Die plane Oberseite der Eckplatte 2, die frei von Auskragungen ist, minimiert nicht nur das Verletzungsrisiko, sondern verhindert auch zuverlässig das Verklemmen der Montagewerkzeuge.

Ein wesentlicher Vorteil der erfindungsgemässen Ausgestaltung der Eckwinkel liegt zudem darin, dass übereinander gestapelte Eckwinkel 1 problemlos von unten her abgestapelt werden können. Die gestapelten Eckwinkel sind dabei derart übereinander angeordnet, dass ihre rechten und linken Schenkel fluchtend angeordnet sind und die entsprechenden Oberseiten 30, 40 der Schenkel den Unterseiten 31, 41 eines zweiten darüber liegenden Eckwinkels zugewandt sind. Durch die spezielle Formgebung der oberseitig ausgeformten Längsrippen 5 und der Klemmkrallen 6, 7 und der nach unten abgesetzten Eckplatte 2 lassen sich die dreistufig (Eckplatte-Schenkel-Längsrippen/Klemmkrallen) oder sogar vierstufig (Spannstufe-Eckplatte-Schenkel-Längsrippen/Klemmkrallen) aufgebauten Eckwinkel 1 problemlos abstapeln, da diese Stufen der Eckwinkel in Verschieberichtung V aufsteigend angeordnet sind, so dass es beim Herausschieben eines untersten Eckwinkels aus einem Stapel in Richtung V ausser der Reibungskraft der aufeinander liegenden Flächen zu keinerlei Behinderung und/oder Hinterschneidung durch Anteile des darüber liegenden Eckwinkels kommt. Da die Stufen zwischen Eckplatte 2 und Schenkeln 3, 4 und zwischen Schenkeln 3, 4 und Längsrippen 5 und Klemmkrallen 6, 7 jeweils stark abgeflacht und alle Übergänge stark abgerundet sind lässt sich ein Eckwinkelstapel auch problemlos von Oben her abstapeln. Dies wird zudem dadurch erleichtert, dass die Längsrippen 5 und Klemmkrallen 6, 7 in bevorzugten Ausführungsformen derart angeordnet sind, dass sie einen freien Bereich definieren, der breiter ist als die diagonale Ausdehnung der Eckplatte 2. Beim Abstapeln eines obersten Eckwinkels in Richtung V von oben her lässt sich die nach unten ragenden Eckplatte 2 problemlos aus einem allfälligen Eingriff in einen von der darunter liegenden Eckplatte gebildeten Absatz schieben und anschliessend zwischen Längsrippen 5 und Klemmkrallen 6, 7 beider Schenkel 3, 4 eines darunter liegenden Eckwinkels hindurch schieben.

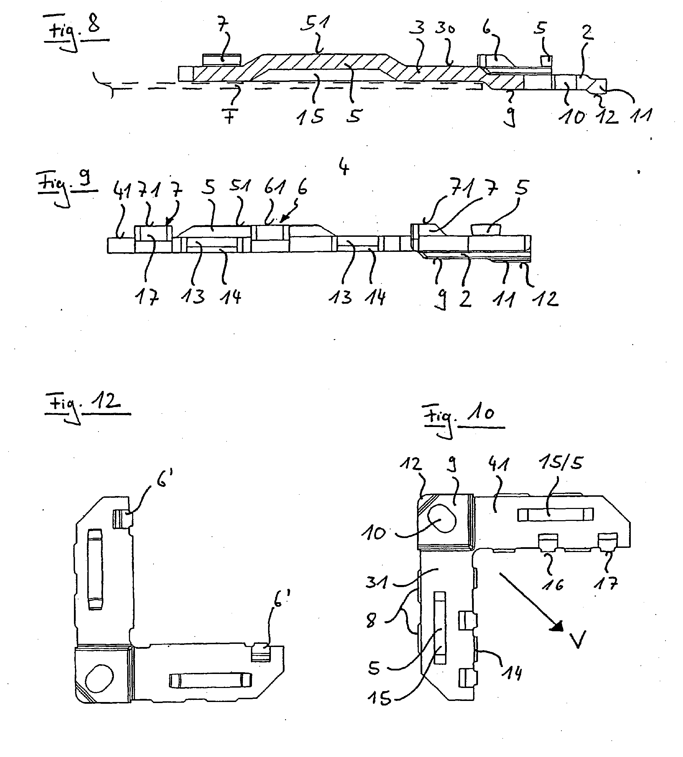

Es ist für den Fachmann offensichtlich, dass die Materialstärken, Länge und Breite der Schenkel und Grösse und Anzahl der Klemmnocken, der Längsrippen und Klemmkrallen der Dimensionierung der zu erstellenden Kanalstücke und der geforderten Stabilitäten angepasst werden kann. Während in den Ausführungsbeispielen der Figuren 1 bis 11 jeweils eine distale 7 und eine proximale 6 Klemmkralle an den Schenkelinnenseiten angeformt sind, zeigt die Figur 12 eine weitere bevorzugte Ausführungsform eins etwas schwächeren Eckwinkels, der vorzugsweise kleiner dimensioniert ist und nur eine Klemmkralle 6' auf jedem Schenkel aufweist. Dieser Eckwinkel eignet sich besonders zum Einsatz mit den bekannten M25 Mabag^{®}-Profilen, die von der Anmelderin bekannt sind, während die Eckwinkel mit zwei Klemmkrallenpaaren vorzugsweise mit den M30 Mabag^{®}-Profilen zum Einsatz kommen. Ein Schnitt durch ein solches Mabag-Profil im Flanschbereich gemäss Figur 13 zeigt, dass die Eckwinkel gemäss der vorliegenden Erfindung in den Mabag-Profil anstelle einer umlaufenden Nut 1 in der Kanalwand einen Absatz l' aufweisen, so dass die abgesetzten Klemmkrallen der eingesetzten Eckwinkel unter den Absatz der Kanalwand greifen und dadurch wiederum das Abkippen der eingebauten Eckwinkel im Flanschprofil sicher und zuverlässig auch bei Stössen und starker Belastung der Kanalstücke verhindern.

### Liste der Bezugszeichen

- 1: Eckwinkel
- 2: Eckplatte
- 3: linker Schenkel
- 4: rechter Schenkel
- 5: Längsrippe
- 6: distale Klemmkrallen
- 7: proximale Klemmkrallen
- 8: äussere Klemmnocken
- 9: Dichtfläche
- 10: Öffnung
- 11: Spannstufe
- 12: Spannfläche
- 13: innere Klemmnocken
- 14: abgerundete Unterkante von 13
- 15: Längsnut
- 16: Stirnfläche von 6
- 17: Stirnfläche von 7
- 18: abgerundete Unterkante von 8
- 30: Oberseite linker Schenkel
- 31: Unterseite linker Schenkel
- 40: Oberseite rechter Schenkel
- 41: Unterseite rechter Schenkel
- 51: Oberseite der Längsrippe
- 61: Oberseite der distale Klemmkralle
- 71: Oberseite der proximalen Klemmkralle

## Patentansprüche

1. Eckwinkel (1) zum Verbinden von Profilflanschen an Endbereichen von Lüftungskanalstücken mit zwei Schenkeln (3,4), die einen Winkel einschliessen und mit einer nach unten abgesetzten Eckplatte (2) verbunden sind, wobei der Eckwinkel derart ausgebildet ist, dass mehrere Eckwinkel derart stapelbar sind, dass die Schenkel (3,4) aufeinander liegender Eckplatten (2) fluchtend angeordnet sind und in dieselbe Richtung weisen, wobei die Schenkel (3,4) im Bereich einer Innenkante ihrer Oberseite (30,40) je mindestens eine Klemmkralle (6, 7) tragen , **dadurch gekennzeichnet, dass** an den Oberseiten (30,40) der Schenkel (3, 4) Längsrippen (5), angeformt sind, die sich im Querschnitt nach oben hin verbreitern.

2. Eckwinkel (1) nach Anspruch 1, **dadurch gekennzeichnet, dass** an den Innenseiten der Schenkel (3, 4) Klemmnocken (13) zum form- und/oder kraftschlüssigen Eingriff in die Profilflansche angeordnet sind.

3. Eckwinkel (1) nach einem der vorhergehenden Ansprüche, **dadurch gekennzeichnet, dass** die Eckplatte (2) eine zentrale Öffnung (10) zur Durchführung von Befestigungsmitteln und diese umgebend eine plane glatte Oberfläche aufweist.

4. Eckwinkel (1) nach einem der vorhergehenden Ansprüche, **dadurch gekennzeichnet, dass** im freien Eckbereich der Eckplatte (2) eine nach unten gerichtete Spannstufe (11) positioniert ist.

5. Eckwinkel (1) nach einem der vorhergehenden Ansprüche, **dadurch gekennzeichnet, dass** Oberseiten der Längsrippen (5) und der Klemmkrallen (6, 7) eine oberste Auflageebene definieren, auf der in einem Eckwinkelstapel Unterseiten (31, 41) darüber liegender Eckwinkel zu liegen kommen.

6. Eckwinkel (1) nach einem der vorhergehenden Ansprüche, **dadurch gekennzeichnet, dass** der Eckwinkel in einer Verschieberichtung V einen mindestens dreistufig ansteigenden Aufbau aufweist, der von der Eckplatte (2) über die Schenkel (3, 4) zu den Klemmkrallen (6, 7) führt, wobei alle Elemente derart angeordnet sind, dass ein hinterschneidungsfreies Herausschieben eines untersten Eckwinkels aus einem Stapel gewährleistet ist.

7. Eckwinkel (1) nach einem der vorhergehenden Ansprüche, **dadurch gekennzeichnet, dass** sie aus einem Metallblech, vorzugsweise in einem Schritt, gestanzt sind.

8. Eckwinkel nach Anspruch 7, **dadurch gekennzeichnet, dass** beim Erstellen der Elemente aus der folgenden Gruppe Eckplatte (2), Längsrippen (5), Klemmkrallen (6, 7) keine Biegung um mehr als 45° vorgenommen werden muss.

9. Kanalstück eines Lüftungskanals umfassend Eckwinkel nach einem der vorhergehenden Ansprüche.

## Claims

1. A corner bracket (1) for connecting profiled flanges at end regions of ventilation duct pieces, having two legs (3, 4) which enclose an angle and are connected to a downwardly offset corner plate (2), wherein the corner bracket is designed in such a way that a plurality of corner brackets can be stacked such that the legs (3, 4) of corner plates (2) lying on top of one another are arranged in alignment and point in the same direction, wherein the legs (3, 4) in the region of an inner edge of their upper side (30, 40) bear in each case at least one clamping claw (6, 7), **characterized in that** longitudinal ribs (5) which in cross section widen upwardly are integrally formed on the upper sides (30, 40) of the legs (3, 4).

2. Corner bracket (1) according to Claim 1, **characterized in that** clamping lugs (13) for positive and/or non-positive engagement in the profile flanges are arranged on the inner sides of the legs (3, 4).

3. Corner bracket (1) according to either of the preceding claims, **characterized in that** the corner plate (2) has a central opening (10) for guiding through fastening means and, surrounding this opening, has a planar smooth surface.

4. Corner bracket (1) according to one of the preceding claims, **characterized in that** a downwardly directed clamping step (11) is positioned in the free corner region of the corner plate (2).

5. Corner bracket (1) according to one of the preceding claims, **characterized in that** upper sides of the longitudinal ribs (5) and of the clamping claws (6, 7) define an uppermost bearing plane on which undersides (31, 41) of corner brackets situated above come to lie in a corner bracket stack.

6. Corner bracket (1) according to one of the preceding claims, **characterized in that** the corner bracket has, in a displacement direction V, a structure which rises in at least three steps and which leads from the corner plate (2) via the legs (3, 4) to the clamping claws (6, 7), wherein all the elements are arranged in such a way that it is ensured that a lowermost corner bracket can be slid out from a stack in an undercut-free manner.

7. Corner bracket (1) according to one of the preceding claims, **characterized in that** it is stamped from a metal sheet, preferably in one step.

8. Corner bracket according to Claim 7, **characterized in that** when producing the elements from the following group, namely corner plate (2), longitudinal ribs (5), clamping claws (6, 7), no bending by more than 45° has to be performed.

9. Duct piece of a ventilation duct comprising corner angles according to one of the preceding claims.

## Revendications

1. Cornière d'angle (1) pour relier des brides profilées au niveau de régions d'extrémité de sections de conduits de ventilation à deux branches (3, 4), qui forment un angle et à une plaque de coin (2) posée vers le bas, la cornière d'angle étant réalisée de telle sorte que plusieurs cornières d'angle puissent être empilées de telle sorte que les branches (3, 4) de plaques de coin (2) superposées soient disposées en affleurement et soient tournées dans la même direction, les branches (3, 4), dans la direction d'une arête interne de leur côté supérieur (30, 40) portant à chaque fois au moins un collier de serrage (6, 7), **caractérisée en ce que** des nervures longitudinales (5) sont façonnées sur les côtés supérieurs (30, 40) des branches (3, 4), lesquelles s'élargissent vers le haut en section transversale.

2. Cornière d'angle (1) selon la revendication 1, **caractérisée en ce que** des cames de serrage (13) pour l'engagement par correspondance géométrique et/ou par force dans les brides profilées sont disposées sur les côtés intérieurs des branches (3, 4).

3. Cornière d'angle (1) selon l'une quelconque des revendications précédentes, **caractérisée en ce que** la plaque de coin (2) présente une ouverture centrale (10) pour le passage de moyens de fixation et une surface lisse et plane entourant celle-ci.

4. Cornière d'angle (1) selon l'une quelconque des revendications précédentes, **caractérisée en ce que** dans la région de coin libre de la plaque de coin (2) est positionné un gradin de serrage orienté vers le bas (11).

5. Cornière d'angle (1) selon l'une quelconque des revendications précédentes, **caractérisée en ce que** des côtés supérieurs des nervures longitudinales (5) et des colliers de serrage (6, 7) définissent un plan d'appui supérieur sur lequel viennent s'appliquer dans une pile de cornières d'angle des côtés inférieurs (31, 41) de cornières d'angle situées par-dessus.

6. Cornière d'angle (1) selon l'une quelconque des revendications précédentes, **caractérisée en ce que** la cornière d'angle présente, dans une direction de déplacement V, une structure montante au moins en trois gradins, qui conduit de la plaque de coin (2) par le biais des branches (3, 4) jusqu'aux colliers de serrage (6, 7), tous les éléments étant disposés de telle sorte que l'on puisse retirer une cornière d'angle la plus inférieure d'une pile sans contre-dépouille.

7. Cornière d'angle (1) selon l'une quelconque des revendications précédentes, **caractérisée en ce qu'**elle est estampée dans une tôle métallique, de préférence en une seule étape.

8. Cornière d'angle selon la revendication 7, **caractérisée en ce que** lors de la création des éléments à partir des groupes suivants : plaque de coin (2), nervures longitudinales (5), colliers de serrage (6, 7), il ne faut pas créer de courbure supérieure à 45°.

9. Section de conduit d'un conduit de ventilation comprenant des cornières d'angle selon l'une quelconque des revendications précédentes.
